Europäisches Patentamt

European Patent Office

Office européen des brevets

(19)

(11) Publication number: **0 161 226 B1**

# EUROPEAN PATENT SPECIFICATION

(45) Date of publication of patent specification: **27.02.91**   (51) Int. Cl.⁵: **H02G 3/04**

(21) Application number: **85850123.2**

(22) Date of filing: **09.04.85**

(54) **Installation duct and mounting bracket therefor.**

(30) Priority: **05.04.84 SE 8401896**
           **05.04.84 SE 8401897**

(43) Date of publication of application:
       **13.11.85 Bulletin 85/46**

(45) Publication of the grant of the patent:
       **27.02.91 Bulletin 91/09**

(84) Designated Contracting States:
       **AT BE CH DE FR GB IT LI LU NL SE**

(56) References cited:
       **AT-B- 361 072        DE-A- 1 690 189**
       **DE-A- 2 946 841      FR-A- 2 280 849**
       **GB-A- 962 949        US-A- 2 107 915**

(73) Proprietor: **Handelsbolaget under Firma Elof Hansson**
       **Första Langgatan 19-21**
       **S-413 27 Göteborg(SE)**

(72) Inventor: **Nyrén, Ulf Einar**
       **Enbärsvägen 38**
       **S-448 00 Floda(SE)**
       Inventor: **Axelsson, Leif**
       **Topasgatan 11**
       **S-421 48 Va. Frölunda(SE)**

(74) Representative: **Ryrlén, J. Evert et al**
       **Awapatent AB Box 53252**
       **S-400 16 Göteborg(SE)**

## Description

The subject invention relates to an installation duct and mounting brackets therefor designed to receive electrical lines, telephone and computer cables and wires and the like therein. The duct comprises an elongate beam having an essentially open rectangular cross-sectional shape and having means formed integral with said beam for securement of the duct by means of the mounting brackets to a support, e.g. a wall. The installation duct comprises storage compartments for reception of the lines, cables, wires, etcetera therein and is equipped with means designed to secure the equipment to be connected to the lines and cables, such as electrical sockets, computer terminals, and the like. The installation duct further comprises a removable lid closing its top and a removable front cover.

Installation ducts of the kind defined above are already well known and widely used. They are employed in order to eliminate the need for drawing electrical lines and telephone cables in ducts formed in the walls proper, for instance in the form of tubular members extending through the walls. The disadvantages of drawing the cables in this manner inside the walls are that they are not easily accessible and that it becomes difficult to replace or redirect them. In order to obviate these drawbacks and to allow the work of drawing cables and wires to be performed with greater ease and convenience installation ducts in the form of elongate, essentially hollow beams have been developed. For light-weight purposes, the ducts are conveniently manufactured from extruded aluminium. The installation ducts are mounted e.g. on walls and are designed to allow easy access to the cables and wires received therein.

One such installation duct is shown in AT-B-361 072. This publication concerns a wall-mounted duct for primarily hospital uses. The duct comprises a number of compartments which are intended to receive conduits for supply of medical gases, pressurized air lines, electrical wiring etcetera separate from each other. The duct has a removable front on which electrical sockets are permanently mounted. The duct is attached directly to a supporting wall or to conventional, wall-mounted brackets by means of permanent fasteners, such as screws. Consequently, it cannot absorb unevenness in the support wall and therefore not either be mounted in a perfectly aligned relationship. Another disadvantage stems from the fixed mounting of the sockets on the removable front, resulting not only in wear on the associated electrical wiring as the latter is repeatedly moved every time the front is opened and closed but also in lack of flexibility, since the sockets cannot be moved to a more convenient position, should the need arise.

Mounting brackets for releasably securing installation ducts of the kind referred to are also known, e.g. from DE-A-1 690 189. The mounting bracket in accordance with this publication is a two-piece bracket, the inner bracket section of which is fiexedly secured to e.g. a wall by means of a fastener, such as a screw, and which inner section is arranged to support the outer, duct-mounting bracket section thereon. However, the outer bracket section is allowed only very reduced movement relative to the wall-mounted inner bracket section and consequently this prior-art mounting bracket does not allow adjustable mounting of the installation duct to compensate for e.g wall unevenness. The distance between the wall and the duct could only be altered by using a separate block, which requires modification of the bracket sections.

The purpose of the subject invention is to provide an installation duct allowing cables, wires and the like to be drawn in the easiest possible way as well as to connect them to their associated sockets, terminals and so on while at the same time making the wires, cables etcetera easily accessible. This is achieved by means of an installation duct which is characterized in that the installation duct comprises at least two groups of compartments for reception therein of said lines, cables, wires and the like, said compartments being delimited by partition walls, that one of these groups of compartments is arranged on top of an upper horizontal plate which is integral with the duct, that the second group of compartments is arranged on a horizontal bottom plate, that a space formed between the two groups of compartments is reserved for securement therein of electrical sockets or similar connection means, which are secured in grooves formed lengthwise of the beam, that slots are formed in the upper horizontal plate to allow said lines, cables, wires and the like to be drawn from the upper group of compartments to the electrical sockets or similar connection means, that the compartments of the lower group of compartments are open upwards to allow said lines, cables, wires and the like to be drawn from this group of compartments to the electrical sockets or similar connection means, that all compartments are positioned to ensure that said lines, cables and wires and the like from the individual compartments may be drawn directly to the associated electrical socket or similar connection means, that the mounting brackets comprise at least two separate sections, said first of these sections designed to be mounted on a support, e.g. a wall and the second section formed with hook members to secure the installation duct on said section, these two sections forming the mounting bracket being interconnected in such a manner that said sections may be displaced relative to each other and may be fixed in position and secured relative to each other, in that the mounting bracket section designed to be secured to a support, such as a wall, consists essentially of a U-shaped section, that the section designed to secure the installation duct is an essentially Z-shaped section and that screw joints are provided to allow the two sections to be fastened to each other, one of the hook members being a tongue-shaped member which is secured by means of the screw joint to a flange on the mounting bracket section intended to be secured on a support, such as a wall, the arrangement being such that when said screw joint is tightened, said tongue-shaped member is locked in a position wherein said installation duct is secured in position. In this manner it becomes possible to draw and position the cables and wires according to the actual and individual needs and requirements.

Owing to this construction of the mounting bracket the distance of the beam from the wall or support on which it is secured may be adjusted at will. This obviates any problem that may arise in attaching the extruded and thus perfectly straight duct beam to uneven or warped wall surfaces. In addition, horizontal alignment of the duct is easily achieved.

Further characteristics of the invention appear from the dependent claim.

The invention will be described in closer detail in the following with reference to the acompanying drawings, wherein

Fig. 1 is a partly sectionalized perspective view of an installation duct in accordance with the invention,

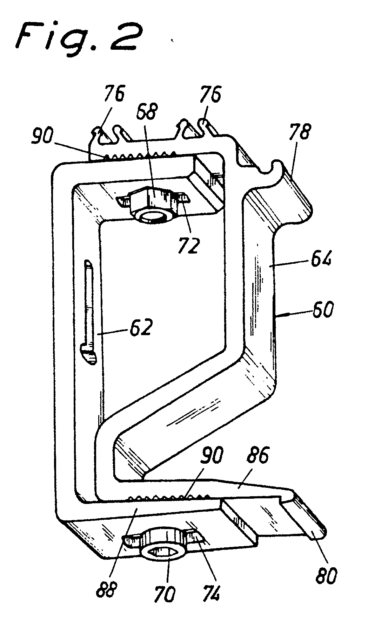

Fig. 2 is a perspective view of a mounting bracket in accordance with the invention, and

Fig. 3 is a cross-sectional view through an installation duct which is secured to a wall or other support with the aid of the mounting bracket in accordance with the invention.

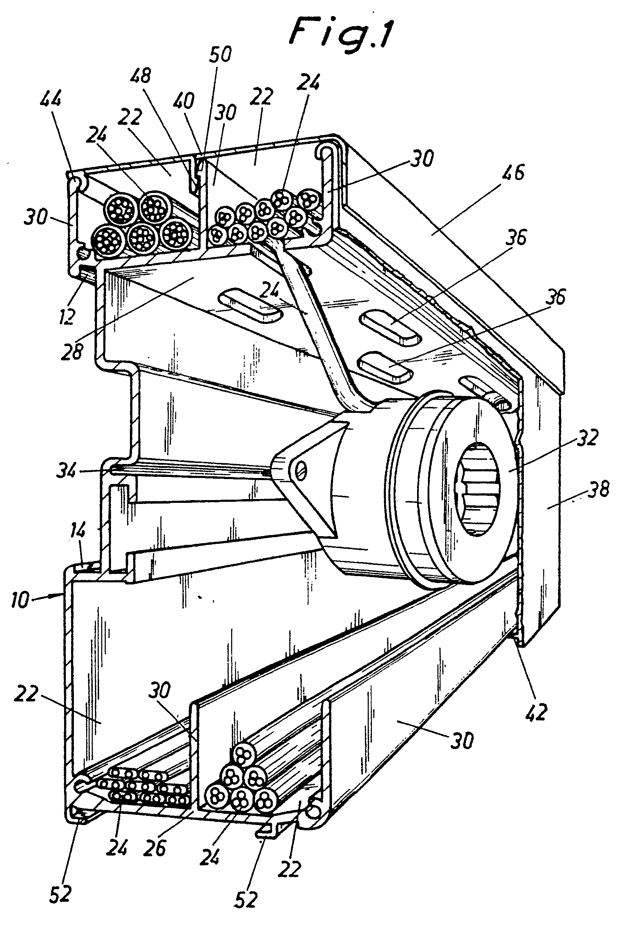

The installation duct which is designated generally by numeral 10 is in the form of an elongate beam, preferably manufactured from extruded aluminium. Owing to the extrusion manufacturing technique the installation duct 10 is easily and conveniently imparted the desired cross-section configuration. As appears from Fig. 1, the beam configuration essentially is in the form of an open rectangle and comprises grooves 12, 14 by means of which the duct 10 may be secured to a mounting bracket 60.

The profile configuration of the duct 10 further includes a number of separate compartments 22 for reception therein of electrical wires, lines and cables 24 of various types. In accordance with the embodiment illustrated in Fig. 1 the duct comprises four compartments 22, two of which are provided at the bottom plate 26 of the duct 10 and two on the upper face of the top plate 28 of the duct. The compartments 22 are delimited by partitions 30 which are integral parts of the rest of the beam structure.

·Owing to the separate compartments 22 it becomes possible to draw lines wires 24 and the like inside the duct in such a manner that the various types of wire are kept separated from each other. Each type of wire 24 has its own compartment 22. As examples of various kinds of wires and lines may be mentioned low-current cables, telephone cables, wires and cables for computer data transmissions and so on. The separate drawing of the various types of wires and cables makes them easily accessible and consequently operations such as mounting of sockets and connections, coupling operations, maintenance and so on are also made easy.

As illustrated in Fig. 1 the installation duct 10 is arranged in such a manner that an electrical socket 32 may be mounted therein. The socket is attached in a groove 34 which is particularly designed for reception and securement of the socket. As an example is chosen a conventional socket 32 for 220 AC voltage. The wires 24 supplying current of this voltage are positioned in the upper right-hand compartment 22 as seen in Fig. 1 and the wire 24 which is drawn up to the socket passes through a slot 36 formed in the bottom wall/top plate 28 of the compartment 22. Also the upper left-hand compartment as seen in Fig. 1 is provided with a slot 36.

The beam 10 is closed by means of covers 38, 40, preferably made of aluminium or a plastics material. One 38 of the covers is arranged to cover the (outer) beam front and the other, 40, to form a lid to close the upper part of the compartments 22. Openings (not shown] are formed in the cover 38 opposite the sockets 32 mounted inside the duct.

The socket 32 consequently may be mounted in the space formed between the two groups of compartments 22 in which lines, wires and the like 24 are drawn. Thus, this space is entirely reserved for e.g. sockets 32 for supply of electricity or for computer terminals and other equipment (such as switches, electrical fittings an so on) to be connected to the wires, lines and cables. These sockets 32 may be positioned wherever desired in the lengthwise direction of the duct 10 and wires, lines, cables 24 and so on may be drawn directly to the sockets 32 without crossing any of the other compartments 22 in which lines of different types are positioned. The installation of sockets 32 and similar means is greatly facilitated compared with prior-art installation ducts. Owing to the provision and design of the groove 34 electrical sockets or computer terminals or tapping points 32 are easy to mount.

The upper edge of the front cover 38 is bent to allow it to grip around the upper front wall 30. Owing to this arrangement, the front cover 38 may be pivoted about its axis of suspension on the front wall. At its lower edge the front cover 38 is provided with a grip rib 42 by means of which it may catch underneath the bottom plate 26. The lid 40 is shaped to allow it to pivot about an embossed ridge 44 formed along the upper edge of the upper/inner wall 30. In addition, the lid 40 is provided with a front flange 46 which is designed to grip the front cover 38 and with a hook nember 48 designed for engagement with a corresponding hook member 50 formed on the opposite partition wall 30. The front cover 38 is mounted before the lid 40 and is locked in position against the duct 10 by means of the lid. Consequently, only the lid 40 need to be removed to provide access to the cables 24 positioned in the upper compartments 22. There is no need to si multaneously remove the front cover 38. High-current cables preferably are disposed inside the lower conpartments 22 and owing to the securement in position of the front cover 38 with the aid of the lid 40 as taught in accordance with the subject invention the risks that high-current cables be exposed by mistake are eliminated.

To interconnect various duct segments into an installation duct guide pins (not shown) preferably are used. The duct 10 is provided with hook members 52 on their lower face to allow separate external ducts holding e.g. large computer cables to be attached to the installation duct 10.

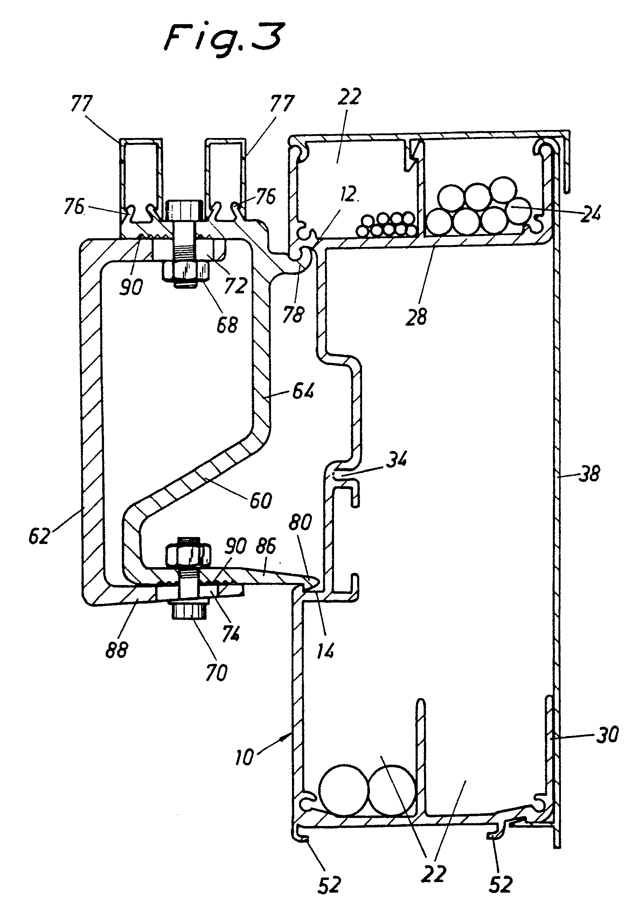

The mounting bracket 60 in accordance with the invention is in two parts, viz. a U-shaped section 62 designed to be attached to a wall or similar support and an essentially Z-shaped section 64 which is designed to engage and support the installation duct 10 (see Fig. 3).

The two sections 62 and 64 are joined together by a screw joint 68, 70. At each one of these screw joints at least one of the sections 62 or 64 is provided with a slot 72, 74 to allow relative displacement of the two sections 62 and 64. In accordance with the embodiment shown in the drawings the slots 72, 74 are formed in section 62 in order to allow section 64 to be equipped with snap fastener members 76 for engagement with and securement of separate convector screens 77.

Section 64 is provided with hook members in the form of prongs 78, 80 directed away from each other. The latter are designed for engagement in grooves 12 and 14, respectively, formed in the installation duct 10. The Z-shaped configuration of section 64 is such that the tongue-shaped part 86 at the end of which the hook member 80 is provided, is yielding and resilient. The tongue 86 extends along one 88 of the limbs of the U-shaped section 62 and is joined to the latter with the aid of the screw joint 70. By tightening the screw joint 70 the tongue 86 is made rigid. The upper hook member 78, on the other hand, is comparatively rigid in itself.

The installation duct 10 is secured to the wall with the aid of the mounting bracket 60 in the following manner. Mounting brackets 60 are attached to the wall or other support onto which the installation duct 10 is to be mounted, with the screw joints 68, 70 in un-tightened condition. The installation duct 10 is then applied in the bracket by insertion of the upper groove 12 therein into engagement with the hook member 78 while the sections 63, 64 are positioned so as to ensure the desired spacing of the duct from the wall, and by positioning the lower groove 14 underneath the lower hook member 80. The latter is moved into its nesting position inside the groove 14 by tigthening of the screw joint 70. In this manner safe and reliable engagement is obtained between the mounting bracket 60 and the installation duct 10. Knurls or grooves 90 assist in preventing relative movement of sections 62, 64 after tightening of the screw joints 68, 70.

The embodiment as described in the aforegoing is to regarded as an example only and a variety of embodiments are possible within the scope of the appended claims. The compartment distribution may be made differently if a larger or smaller number than four compartments is desired.

### Claims

1. An installation duct (10) and mounting brackets (60) therefor for reception of electrical lines, telephone and computer cables and wires (24) and the like, said duct comprising an elongate beam having an essentially open rectangular cross-sectional shape and having means formed integral with said beam for securement of said duct (10) by means of the mounting bracket to a support, e.g. a wall, said installation duct (10) comprising storage compartments for reception of the lines, cables, wires (24) and the like therein and being equipped with means designed to secure the equipment to be connected to the lines and cables, such as electrical sockets (32), computer terminals and the like, said installation duct (10) further comprising a removable lid (40) closing its top and a removable front cover (38),

   **characterized** in that the installation duct (10) comprises at least two groups of compartments (22) for reception therein of said lines, cables, wires (24) and the like, said compartments being delimited by partition walls (30), that one of these groups of compartments (22) is arranged on top of an upper horizontal plate (28) which is integral with the duct (10), that the second group of compartments is arranged on a horizontal bottom plate (26), that a space formed between the two groups of compartments (22) is reserved for securement therein of electrical sockets (32) or similar connection means, which are secured in grooves (34) formed lengthwise of the beam, that slots (36) are formed in the upper horizontal plate (28) to allow said lines, cables, wires (24) and the like to be drawn from the upper group of compartments (22) to the electrical sockets (32) or similar connection means, that the compartments of the lower group of compartments are open upwards to allow said lines, cables, wires (24) and the like to be drawn from this group of compartments to the electrical sockets (32) or similar connection means, that all compartments (22) are positioned to ensure that said lines, cables and wires (24) and the like from the individual compartments may be drawn directly to the associated electrical socket (32) or similar connection means, that the mounting brackets (60) comprise at least two separate sections (62, 64), said first (62) of these sections designed to be mounted on a support, e.g. a wall and the second section (64) formed with hook members (78, 80) to secure the installation duct (10) on said section, these two sections forming the mounting bracket being interconnected in such a manner that said sections (62, 64) may be displaced relative to each other and may be fixed in position and secured relative to each other, in that the mounting bracket section designed to be secured to a support, such as a wall, consists essentially of a U-shaped section (62), that the section designed to secure the installation duct (10) is an essentially Z-shaped section (64) and that screw joints (68, 70) are provided to allow the two sections to be fastened to each other, one of the hook members (80) being a tongue-shaped member which is secured by means of the screw joint (70) to a flange (88) on the mounting bracket section (62) intended to be secured on a support, such as a wall, the arrangement being such that when said screw joint (70) is tightened, said tongue-shaped member (86) is locked in a position wherein said installation duct (10) is secured in position.

2. An installation duct and mounting brackets therefor as claimed in claim 1, **characterized** in that the lid (40) is arranged to grip the front cover (38) to hold it fast to the installation duct (10).

**Revendications**

1. Conduite de canalisation (10) avec agrafes de montage appropriées (60) pour recevoir des fils électriques, fils et câbles de téléphone et d'ordinateur et similaires (24), cette conduite comportant une poutre allongée qui présente une forme de section transversale essentiellement rectangulaire et ouverte et qui comporte des moyens formés intégralement avec cette poutre pour fixer cette conduite (10) à un support tel qu'un mur au moyen de l'agrafe de montage, cette conduite de canalisation (10) comportant des compartiments de rangement pour y recevoir les fils électriques, câbles, fils et similaires (24) et étant munie de moyens destinés à fixer l'équipement à connecter aux fils et câbles, tels que des prises électriques (32), des terminaux d'ordinateur et similaires, cette conduite de canalisation (10) comportant en outre un couvercle amovible (40) qui la ferme en son sommet ainsi qu'une paroi de couverture frontale amovible (38),

caractérisée en ce que la conduite de canalisation (10) comporte au moins deux groupes de compartiments (22) pour y recevoir les fils électriques, câbles, fils et similaires (24), ces compartiments étant délimités par des parois de séparation (30), en ce que l'un de ces deux groupes de compartiments (22) est disposé au-dessus d'une plaque supérieure horizontale (28) qui est formé intégralement avec la conduite (10), en ce que le deuxième groupe de compartiments est disposé sur une plaque inférieure horizontale (26), en ce qu'un espace formé entre les deux groupes de compartiments (22) est ménagé pour y fixer des prises électriques (32) ou moyens de connexion similaires qui sont fixés dans des gorges (34) formées le long de la poutre, en ce que des fentes (36) sont formées dans la plaque supérieure horizontale (28) afin de permettre de tirer les fils électriques, câbles, fils et similaires (24) du groupe supérieur de compartiments (22) vers les prises électriques (32) ou moyens de connexion similai res, en ce que les compartiments du groupe inférieur de compartiments sont ouverts vers le haut afin de permettre de tirer les fils électriques, câbles, fils et similaires (24) de ce groupe de compartiments vers les prises électriques (32) ou moyens de connexion similaires, en ce que tous les compartiments (22) sont placés de façon à assurer que ces fils électriques, câbles, fils et similaires (24) provenant des compartiments individuels puissent être tirés directement vers la prise électrique (32) ou le moyen de connexion similaire associé, en ce que les agrafes de montage (60) comportent au moins deux sections séparées (62,64), la première (62) de ces sections étant destinée à être montée sur un support tel qu'un mur et la deuxième section (64) étant formée de façon à présenter des éléments en forme de crochet (78,80) pour fixer la conduite de canalisation (10) sur cette section, ces deux sections qui forment l'agrafe de montage étant reliées entre elles de telle manière que ces sections (62,64) peuvent être déplacées l'une par rapport à l'autre et peuvent être maintenues en place et fixées l'une par rapport à l'autre, en ce que la section d'agrafe de montage destinée à être montée sur un support tel qu'un mur consiste essentiellement en une section (62) en forme de U, en ce que la section destinée à fixer la conduite de canalisation (10) est essentiellement une section (64) en forme de Z, et en ce que des jonctions à vis (68,70) sont prévues afin de permettre de serrer les deux sections l'une contre l'autre, un des éléments en forme de crochet (80) étant un élément en forme de languette qui est fixé au moyen de la jonction à vis (70) à une bride (88) de la section d'agrafe de montage (62) destinée à être montée sur un support tel qu'un mur, la disposition étant telle que lorsque l'on serre cette jonction à vis (70) l'élément en forme de languette (86) se trouve verrouillé dans une position où la conduite de canalisation (10) demeure fixée en sa position.

2. Conduite de canalisation avec agrafes de montage appro priées, selon la revendication 1, caractérisée en ce que le couvercle (40) est disposé de façon à saisir la paroi de couverture frontale amovible (38) pour la maintenir fixée à la conduite de canalisation (10).

**Ansprüche**

1. Installationsführung (10) mit dafür bestimmten Montageklammern (60) zur Aufnahme von elektrischen Leitungen, Telefon-und Computerdrähten und -kabeln und dergleichen (24); wobei diese Führung einen länglichen Balken umfasst, der eine im wesentlichen rechteckige offene Querschnittsform aufweist und mit diesem Balken integral geformte Mittel zur Befestigung dieser Führung (10) mittels der Montageklammer auf einen Träger wie eine Wand umfasst, wobei diese Installationsführung (10) Lagerungsabteile zur Aufnahme der elektrischen Leitungen, Kabel, Drähte und dergleichen (24) umfasst und mit Mitteln zur Befestigung der mit den Drähten und Kabeln zu verbindenden Apparatur wie elektrische Steckdosen (32), Computer-Terminals und dergleichen versehen ist, wobei diese Installationsführung (10) ausserdem einen sie oben schliessenden entfernbaren Deckel (40) und eine entfernbare Frontabdeckung (38) umfasst,

dadurch gekennzeichnet, dass die Installationsführung (10) mindestens zwei Gruppen von Abteilen (22) zur Aufnahme der elektrischen Leitungen, Kabel, Drähte und dergleichen (24) umfasst, wobei diese Abteile durch Trennwandungen (30) begrenzt sind, dass eine dieser beiden Gruppen von Abteilen (22) über einer mit der Führung (10) integral geformten oberen horizontalen Platte (28) angeordnet ist, dass die zweite Gruppe von Abteilen auf einer unteren horizontalen Platte (26) angeordnet ist, dass ein zwischen den beiden Gruppen von Abteilen (22) gebildeter Freiraum vorgesehen ist, um elektrische Steckdosen (32) oder ähnliche Verbindungsmittel darauf zu befestigen, die in längs des Balkens geformten Nuten (34) befestigt sind, dass in der oberen horizontalen Platte (28) Schlitze (36) geformt sind, um zu erlauben, die elektrischen Leitungen, Kabel, Drähte und dergleichen (24) von der oberen Gruppe von Abteilen (22) zu den elektrischen Steckdosen (32) oder ähnlichen Verbindungsmitteln zu ziehen, dass die Abteile der unteren Gruppe von Abteilen nach oben offen sind, um zu erlauben, die elektrischen Leitungen, Kabel, Drähte und dergleichen (24) von dieser Gruppe von Albteilen zu den elektrischen Steckdosen (32) oder ähnlichen Verbindungsmitteln zu ziehen, dass alle Abteile (22) so angeordnet sind, dass gesichert ist, dass diese elektrischen Leitungen, Kabel, Drähte und dergleichen (24) aus den einzelnen Abteilen direkt zur zugeordneten elektrischen Steckdose (32) oder zum ähnlichen Verbindungsmittel gezogen werden können, dass die Montageklammern (60) mindestens zwei getrennte Abschnitte (62,64) umfassen, wobei der erste (62) dieser Abschnitte zur Montage auf einen Träger wie eine Wand bestimmt ist und der zweite Abschnitt (64) so geformt ist, dass er hakenförmige Elemente (78,80) zur Befestigung der Installationsführung (10) auf diesen Abschnitt aufweist, wobei diese beiden die Montageklammer bildenden Abschnitte untereinander so verbunden sind, dass diese Abschnitte (62,64) gegeneinander verschiebbar und relativ zueinander positionierbar und festhaltbar sind, dass der zur Montage auf einen Träger wie eine Wand bestimmte Abschnitt der Montageklammer im wesentlichen aus einem U-förmigen Abschnitt (62) besteht, dass der zur Befestigung der Installationsführung (10) bestimmte Abschnitt im wesentlichen aus einem Z-förmigen Abschnitt (64) besteht, und dass Schraubenverbindungen (68,70) vorgesehen sind, um zu erlauben, die beiden Abschnitte aufeinander zu klemmen, wobei eines der hakenförmige Elemente (80) ein zungenförmiges Element ist, das mittels der Schraubenverbindung (70) am Montageklammerabschnitt (62) auf einen Flansch (88) befestigt ist, der dazu bestimmt ist, auf einen Träger wie eine Wand montiert zu sein, wobei die Anordnung solcher Art ist, dass das zungenförmige Element (86), wenn diese Schraubenverbindung (70) angezogen wird, in einer Position verriegelt wird, in der die Installationsführung (10) in ihrer Position befestigt bleibt.

2. Installationsführung mit dafür bestimmten Montageklammern gemäss Anspruch 1, dadurch gekennzeichnet, dass der Deckel (40) so angeordnet ist, dass er die Frontabdeckung (38) umgreift, um sie auf die Installationsführung (10) befestigt zu halten.

Fig.1

# Fig. 2

# Fig. 3